# EUROPÄISCHE PATENTSCHRIFT

(11) **EP 1 791 999 B1**
(45) Veröffentlichungstag und Bekanntmachung des Hinweises auf die Patenterteilung: **14.05.2008**
(21) Anmeldenummer: 05779292.1
(22) Anmeldetag: 06.09.2005
(51) Int. Cl.: D06F 37/06, B29C 65/60

(54) **VERFAHREN ZUR BEFESTIGUNG VON KUNSTSTOFFMITNEHMERN IN WÄSCHETROMMELN**
METHOD FOR FASTENING PLASTIC DRIVERS IN WASHING DRUMS
PROCEDE POUR FIXER DES ELEMENTS D'ENTRAINEMENT EN MATIERE PLASTIQUE, DANS DES TAMBOURS DE LAVAGE

(30) Priorität: 09.09.2004 DE 102004043716
(43) Veröffentlichungstag der Anmeldung: 06.06.2007
(73) Patentinhaber: BSH Bosch und Siemens Hausgeräte GmbH, 81739 München (DE)
(72) Erfinder: RATFISCH, Uwe, 14193 Berlin (DE)
(86) Internationale Anmeldenummer: PCT/EP2005/054382
(87) Internationale Veröffentlichungsnummer: WO 2006/027353

(56) Entgegenhaltungen:
- DD-A3- 275 366
- DE-A1- 2 707 224
- DE-A1- 3 803 195
- PATENT ABSTRACTS OF JAPAN Bd. 1998, Nr. 14, 31. Dezember 1998 (1998-12-31) -& JP 10 235086 A (SANYO ELECTRIC CO LTD), 8. September 1998 (1998-09-08)
- PATENT ABSTRACTS OF JAPAN Bd. 2003, Nr. 12, 5. Dezember 2003 (2003-12-05) -& JP 2004 105250 A (TOSHIBA CORP), 8. April 2004 (2004-04-08)
- PATENT ABSTRACTS OF JAPAN Bd. 007, Nr. 047 (M-196), 24. Februar 1983 (1983-02-24) -& JP 57 195616 A (TAKASHIMAYA NITSUPATSU KOGYO KK), 1. Dezember 1982 (1982-12-01)

## Beschreibung

Die Erfindung betrifft ein Verfahren zum Befestigen eines aus warm verformbarem Kunststoff hergestellten Mitnehmers in einer Wäschetrommel einer Wasch- oder Trockenmaschine, worin der oder die Mitnehmer mindestens zwei innenliegende, einen entlang ihrer Mittellinie sich erstreckenden Hohlraum aufweisende Dome haben, die senkrecht auf das Mantelblech der Wäschetrommel weisen und der Befestigung des Mitnehmers dienen.

Derartige Befestigungsverfahren sind bekannt (GB 1 161 219) Dabei werden die aus Kunststoff bestehenden Mitnehmer regelmäßig derartig zum Befestigen vorbereitet, dass eine Art der Dome einen rechteckigen Querschnitt aufweisen und ihre Enden mit rechtwinklig seitwärts sich erstreckenden Nasen hinter einen Rand eines ebenfalls rechtwinkligen Durchbruches im Mantelblech greifen. Mit einer zweiten Art von Domen, deren Hohlräume zum Einschrauben von selbstfurchenden Schrauben geeignet sind und die lediglich von innen am Rand des zugeordneten Loches am Mantelblech anliegen, werden die

Mitnehmer in der durch die rechteckigen Durchbrüche vorgegebenen Lage fixiert (vgl. JP 10 235 086 A).

Zwar sind aus Kunststoff bestehende Mitnehmer in Wäschetrommeln von qualitativ anspruchsvollen Waschmaschinen regelmäßig in dieser Art innen am Mantelblech befestigt worden. Es hat sich jedoch gezeigt, dass dies Art der Befestigung von Mitnehmern durch keine Rationalisierungsmaßnahme mehr in der Montage billiger werden kann.

Der Erfindung liegt die Aufgabe zugrunde, eine Form von Mitnehmern und ein daran geknüpftes Befestigungsverfahren anzugeben, bei dem die Voraussetzungen für eine automatische Montage gegeben sind.

Zur Lösung dieser Aufgabe schlägt die Erfindung gemäß dem Kennzeichen von Anspruch 1 vor, dass
- in das Mantelblech der Wäschetrommel für jeden Mitnehmer ein Lochbild entsprechend der Anordnung der Dome eines Mitnehmers gestanzt wird,
- der Mitnehmer mit seinen die Kontaktfläche des Mitnehmers zum Mantelblech überragenden Domenden so auf das Mantelblech gesetzt wird, dass die Domenden die Löcher des Lochbildes durchdringen,
- von der Gegenseite in die Hohlräume der Dome Gegenhalter eingeführt werden,
- von der Befestigungsseite her Niederhalter gegen das Mantelblech gefahren werden,
- von der Befestigungsseite her gegen die Domenden Formstempel gefahren werden, die eine Beheizung der Domenden verursachen, bis die Domenden im Warmformverfahren erzeugte Pilzhauben haben, die mit ihren Hutkrempen von außen auf den die Löcher umgebenden Bereichen des Mantelbleches aufliegen,
- schließlich in dieser angegebenen Reihenfolge alle Formstempel, Niederhalter und Gegenhalter zurückgefahren werden.

In Ausgestaltung der Erfindung wird durch Anspruch 4 ein Befestigungswerkzeug zur Durchführung des Verfahrens angegeben, bei dem in der Anordnung des Lochbildes leicht konisch geformte Gegenhalter so befestigt sind, dass ihre Enden mit Druck gegen die Böden der Hohlräume in den Domen zur Anlage kommen, wenn die Kontaktfläche des Mitnehmers auf der Innenseite des Mantelbleches anliegt. Die Konizität der Gegenhalter wird in für den Fachmann bekannter Weise gewählt, um die Gegenhalter nach der Befestigung des Mitnehmers wieder leicht aus dem Hohlraum des Domes ziehen zu können. Die Enden sollen zum Gegenhalten der Mitnehmer möglichst mit gleicher Kraft auf die Böden der Hohlräume drücken, damit der Mitnehmer an allen Stellen gleichmäßig und spielfrei am Trommelmantel anliegt.

In weiterer Ausgestaltung der Erfindung sind die mit den Gegenhaltern in prozessualer Wirkverbindung stehenden Niederhalter so angeordnet, dass sie in der Nähe der Dome bis zur Innenfläche des Mantelbleches reichende Innenraumeinbauten des Mitnehmers gegenüberstehen und für ihren Arbeitseinsatz bis zum fest gegen die Einbauten gepressten Mantelblech gefahren werden können, und die Formstempel mit in Negativform abgebildeten pilzkopfförmigen Enden passend zum Lochbild angeordnet und beheizbar. Außerdem lassen sie sich nach dem Gegenhalten und dem Niederhalten so weit gegen die Domenden fahren, bis sich eine zur Befestigung ausreichend breite Hutkrempe an jedem Domende gebildet hat.

Ferner ist es bei einer Weiterbildung der Erfindung von Vorteil, wenn die Dome sie umgebende Stützwände aufweisen, die bis auf die Innenfläche des Mantelbleches reichen, und jeder Niederhalter ein den zugeordneten Formstempel umgebendes hohlzylinderförmiges Ende aufweist. Durch diese Zusammenführung von Merkmalen des Mitnehmers und des Befestigungswerkzeugs ist eine absolut sichere Anlage des Mitnehmers an der Innenfläche des Mantelbleches gewährleistet, bevor der Warmformvorgang beginnt. Diese Maßnahme lässt am ehesten eine dauerhaft sichere Befestigung des Mitnehmers erwarten.

Die in den Unteransprüchen beschriebenen Fortbildungen des Verfahrens und der Befestigungswerkzeuge zur Durchführung der Verfahrensvarianten können in beliebiger Kombination miteinander in vorteilhafter Weise angewendet werden.

Anhand eines in der Zeichnung dargestellten Ausführungsbeispiels wird die Erfindung nachstehend erläutert. Es zeigen
- Fig. 1: eine schematisch und geschnitten dargestellte Wäschetrommel mit innen angebrachten Mitnehmern,
- Fig. 2: einen Blick auf ein Lochbild für die zur Befestigung dienenden Dome eines Mitnehmers,
- Fig. 3: einen Querschnitt durch einen Mitnehmer nach dem Einsetzen in das Mantelblech,
- Fig. 4: einen Querschnitt entsprechend Fig. 3 beim Einführen der Gegenhalter,
- Fig. 5: einen Querschnitt entsprechend Fig. 3 beim Ansetzen der Niederhalter,
- Fig. 6: einen Querschnitt entsprechend Fig. 3 beim Einführen der Formstempel,
- Fig. 7: einen Querschnitt entsprechend Fig. 6 beim Formen der Pilzhauben der Domenden durch die warmen Formstempel,
- Fig. 8: einen Querschnitt durch einen befestigten Mitnehmer gemäß Fig. 6 und
- Fig. 9: eine vergrößerte Darstellung der geschnitten dargestellten Pilzhaube entsprechend der Einzelheit IX in Fig. 7.

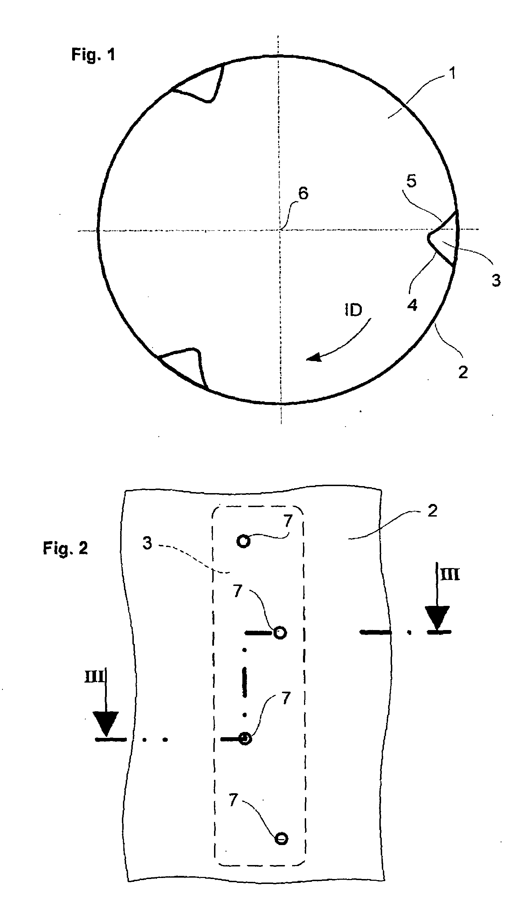

Die in Fig. 1 schematisch und im Querschnitt dargestellte Wäschetrommel 1 enthält drei an der Innenseite ihres Trommelmantels 2 gleichmäßig verteilte Wäschemitnehmer 3, deren Querschnitt unsymmetrisch ist. Die in Intensiv-Drehrichtung ID vorn liegende Flanke 4 der Mitnehmer 3 ist steiler gegenüber der Innenfläche des Trommelmantels 2 angeordnet als die in Intensiv-Drehrichtung ID der Wäschetrommel 1 hinten liegende Flanke 5.

Dadurch kann in der intensiv-Drehrichtung ID weniger empfindliche Wäsche mechanisch intensiver behandelt werden als empfindliche Wäsche in der Gegenrichtung, weil in der Gegenrichtung weniger steile Flanken mechanisch auf die Wäsche einwirken.

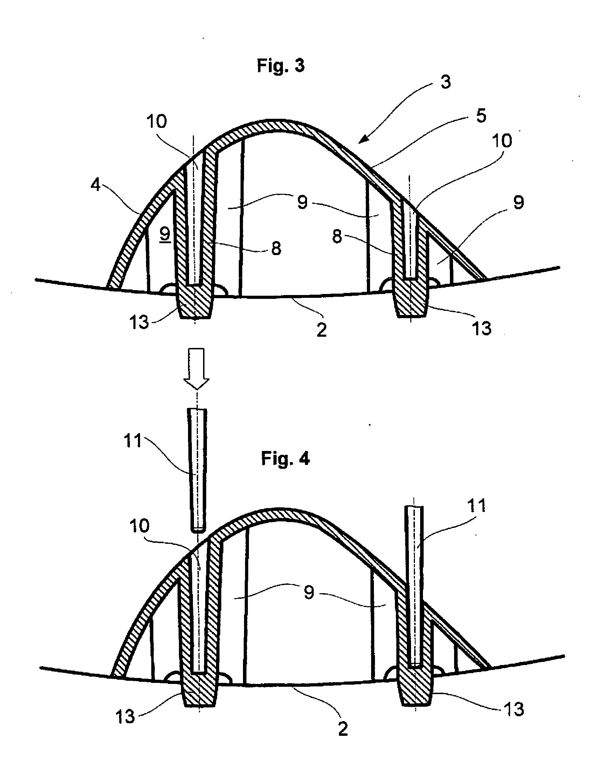

Wenn man in Höhe eines Mitnehmers 3 von außen auf die Wäschetrommel 1 blickt, bietet sich in etwa ein Blick wie in Fig. 2 dargestellt. Strukturierungen des Trommelmantels 2, etwa Flutlöcher oder Prägungen, sind hier der besseren Erkennbarkeit des innen liegenden Mitnehmers 3 wegen fortgelassen worden. Der Mitnehmer 3 ist auf der Innenseite des Trommelmantels 2 gestrichelt angedeutet. Er ist etwa parallel zur Trommelachse 6 (Fig. 1) montiert und hat dazu vier im Bild der Löcher 7 angeordnete Dome (Fig. 3), die durch die Löcher 7 hindurchragen.

Entlang der Schnittebene III in Fig. 2 ist der Mitnehmer 3 zusammen mit diesem Teil des Trommelmantels 2 in Fig. 3 bis 8 geschnitten dargestellt. Der Mitnehmer 3 ist dazu aus einer nach unten (auf den Trommelmantel 2 zu) offenen Schale aus einem Kunststoffspritzling gebildet, der im Wesentlichen hohl ist, in seinem Innenraum aber vier senkrecht auf den Trommelmantel 2 gerichtete Dome 8 hat und jeweils zwei bis vier Innenraumeinbauten in Form von sternförmig um jeweils einen Dom 8 gruppierten Flügeln 9. Die Dome 8 haben ihrerseits ebenfalls Hohlräume 10 und zwar auf einem wesentlichen Teil ihrer Länge bis in eine Höhe etwas oberhalb des Niveaus der Innenfläche des Trommelmantels 2.

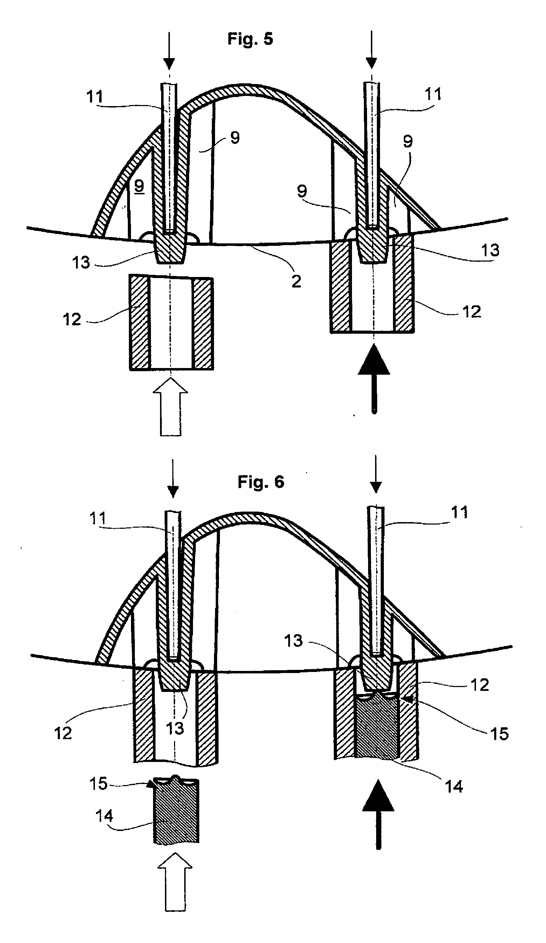

Zum Befestigen eines solchen Mitnehmers 3 wird dieser zunächst gemäß Fig. 3 vom Innenraum der Wäschetrommel 1 her an den Trommelmantel 2 angesetzt und mit den Domen 8 in die Löcher 7 eingesetzt. Dann werden in die Hohlräume 10 aller Dome 8 gleichzeitig Gegenhalter 11 bis zum Grund der Hohlräume 10 eingefahren (Fig. 4), so dass der Mitnehmer 3 an allen Kontaktflächen etwa denselben Anpressdruck zum Trommelmantel 2 überträgt. Von der Befestigungsseite der Dome 3 her (das ist die Außenseite des Trommelmantels 2) werden dann Niederhalter 12 gegen das Blech des Trommelmantels 2 gefahren (Fig. 5). Diese Niederhalter 12 sind ebenfalls hohl mit einem Durchmesser, der die Domenden 13 vorzugsweise mit Abstand umfasst. Die Niederhalter 12 werden wie die Gegenhalter 11 vorzugsweise gleichzeitig in Arbeitsstellung gefahren, damit das Blech des Trommelmantels 2 gleichmäßig gegen die Kontaktflächen des Mitnehmers 3 gepresst wird. Zur Vergrößerung der Kontaktfläche des Mitnehmers 3 sind die Flügel 9 vorgesehen, die sich mit ihren Stirnflächen dem Druck der Niederhalter 12 widersetzen.

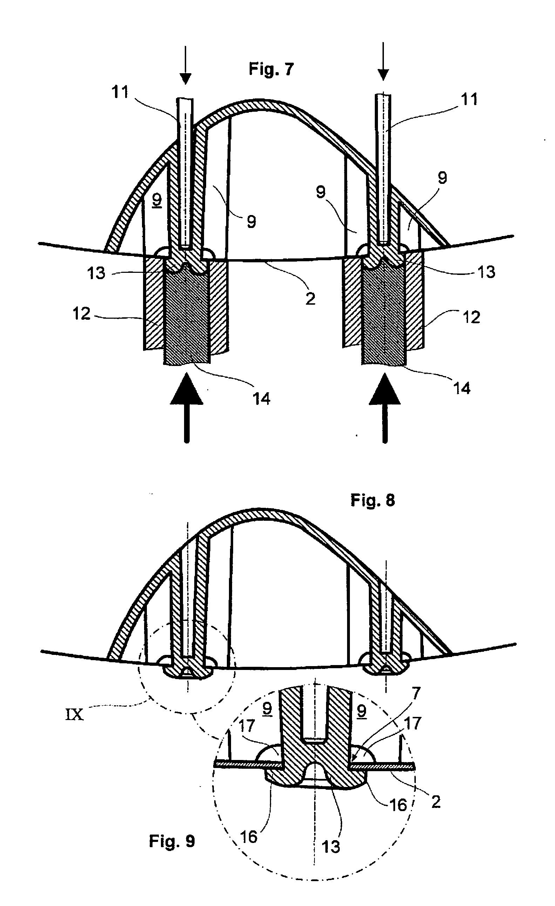

Gemäß Fig. 6 werden in die Hohlräume der Niederhalter 12 Formstempel 14 eingeführt, die zuvor erwärmt wurden und deren Frontpartien 15 in Negativform abgebildete pilzkopfförmige Enden aufweisen. Sobald die warmen Frontpartien 15 auf die Domenden 13 treffen, beginnen die Domenden zu schmelzen und sich der Pilzform der Frontpartien 15 anzupassen. Dabei weicht das Material der Domenden 13 seitwärts aus und wird den Raum unterhalb der Formstempel 14 und innerhalb des Hohlraums der Niederhalter 12 ausfüllen (Fig. 7). Die dabei entstehende Hutkrempe der pilzartig geformten Domenden 13 legt sich von außen auf des Blech des Trommelmantels 2 und kühlt nach Abziehen der Formstempel 14 so weit ab, dass schließlich die Niederhalter 12 und die Gegenhalter 11 ebenfalls abgezogen werden können, ohne dass die neu gebildete Pilzform der Domenden 13 sich noch zurückbilden würde. Damit sitzt der Mitnehmer fest am Trommelmantel 2 (Fig. 8).

Anstelle der oder zusätzlich zur Vorwärmung der Formstempel 14 können die Formstempel 14, sobald sie in die Berührungsposition zu den Domenden 13 gefahren sind, mit einem Ultraschallsignal mechanisch erregt werden, das sie auf die Domenden übertragen. Dadurch erwärmt sich der mitschwingende Kunststoff der Domenden 13 wesentlich schneller als die Formstempel 14, so dass die Formstempel 14 fast kalt bleiben, während die Domenden 13 sehr schnell in die Zähschmelze übergehen und sich dem Druck der Formstempel 14 folgend die Pilzform annehmen. Der Schwingungsimpuls kann dabei anforderungsgerecht gesteuert werden, so dass tatsächlich nur soviel Wärme erzeugt wird, wie zum Umschmelzen der Domenden 13 in die gewünschten Pilzhauben (Fig. 8) benötigt wird.

In der in Fig. 9 dargestellten Einzelheit IX der Fig. 8 ist zu erkennen, dass sich die Hutkrempe 16 des Domendes 13 in einem Umgebungsbereich des Loches 7 am Trommelmantel 2 anlegt, der von der Gegenseite aufgrund von Ausnehmungen 17 der Flügel 9 nicht abgestützt ist. Das Blech des Trommelmantels 2 federt hier etwas zurück, so dass das Domende 13 mit seiner Hutkrempe 16 den Mitnehmer unter Federspannung am Mantelblech fest hält. Dadurch wird vermieden, dass sich ein befestigter Mitnehmer 3 so weit vom Mantelblech lösen kann, dass der Mitnehmer klappern und durch die darauf folgende ständige Relativbewegung zum Mantelblech schließlich die Verbindung aufgeben würde.

## Patentansprüche

1. Verfahren zum Befestigen eines aus warm verformbarem Kunststoff hergestellten Mitnehmers (3) in einer Wäschetrommel (1) einer Wasch- oder Trockenmaschine, worin der oder die Mitnehmer (3) mindestens zwei innenliegende, einen entlang ihrer Mittellinie sich erstreckenden Hohlraum (10) aufweisende Dome (8) haben, die senkrecht auf das Mantelblech (2) der Wäschetrommel (1) weisen und der Befestigung des Mitnehmers (3) dienen, **dadurch gekennzeichnet, dass**
- in das Mantelblech (2) der Wäschetrommel für jeden Mitnehmer ein Lochbild entsprechend der Anordnung der Dome (8) eines Mitnehmers (3) gestanzt wird,
- der Mitnehmer (3) mit seinen die Kontaktfläche des Mitnehmers (3) zum Mantelblech (2) überragenden Domenden (13) so auf das Mantelblech (2) gesetzt wird, dass die Domenden (13) die Löcher (7) des Lochbildes durchdringen,
- von der Gegenseite in die Hohlräume (10) der Dome (8) Gegenhalter (11) eingeführt werden,
- von der Befestigungsseite her Niederhalter (12) gegen das Mantelblech (2) gefahren werden,
- von der Befestigungsseite her gegen die Domenden (13) Formstempel (14) gefahren werden, die eine Beheizung der Domenden (13) verursachen, bis die Domenden (13) im Warmformverfahren erzeugte Pilzhauben haben, die mit ihren Hutkrempen (16) von außen auf den die Löcher (7) umgebenden Bereichen des Mantelbleches (2) aufliegen,
- schließlich in dieser Reihenfolge alle Formstempel (14), Niederhalter (12) und Gegenhalter (11) zurückgefahren werden.

2. Verfahren nach Anspruch 1, **dadurch gekennzeichnet, dass** der Formstempel (14) beheizt wird.

3. Verfahren nach Anspruch 1, **dadurch gekennzeichnet, dass** der Formstempel (14) nach dem Niederfahren auf die Domenden (13) in Ultraschallschwingungen gebracht wird und die Schwingungen auf das Kunststoffmaterial der Domenden (13) überträgt, wodurch das Kunststoffmaterial sich erwärmt.

4. Befestigungswerkzeug zur Durchführung des Verfahrens nach einem der Ansprüche 1 bis 3, bei dem in der Anordnung des Lochbildes leicht konisch geformte Gegenhalter (11) so befestigt sind, dass ihre Enden mit Druck gegen die Böden der Hohlräume (10) in den Domen (8) zur Anlage kommen, wenn die Kontaktfläche des Mitnehmers (3) auf der Innenseite des Mantelbleches (2) anliegt.

5. Befestigungswerkzeug nach Anspruch 4, **dadurch gekennzeichnet, dass** mit den Gegenhaltern (11) in prozessualer Wirkverbindung stehende Niederhalter (12) so angeordnet sind, dass sie in der Nähe der Dome (8) bis zur Innenfläche des Mantelbleches (2) reichenden Innenraumeinbauten des Mitnehmers (3) gegenüberstehen und für ihren Arbeitseinsatz bis zum fest gegen die Einbauten gepressten Mantelblech (2) gefahren werden können, und dass Formstempel (14) mit in Negativform abgebildeten pilzkopfförmigen Enden passend zum Lochbild angeordnet und beheizbar sind, die sich nach dem Gegenhalten und dem Niederhalten so weit gegen die Domenden (13) fahren lassen, bis sich eine zur Befestigung ausreichend breite Hutkrempe (16) an jedem Domende (13) gebildet hat, und auf die Domenden (13) Heizenergie übertragen.

6. Befestigungswerkzeug nach Anspruch 5, **dadurch gekennzeichnet, dass** die Dome (8) sie umgebende Stützwände aufweisen, die bis auf die Innenfläche des Mantelbleches (2) reichen, und dass jeder Niederhalter (12) ein den zugeordneten Formstempel (14) umgebendes hohlzylinderförmiges Ende aufweist.

7. Befestigungswerkzeug nach Anspruch 6, **dadurch gekennzeichnet, dass** der Formstempel (14) im Hohlzylinder des Niederhalters (12) nahezu spielfrei geführt ist.

## Claims

1. Method of fastening an entrainer (3), which consists of a plastics material deformable under heat, in a laundry drum (1) of a washing or drying machine, wherein the entrainer or entrainers (3) has or have at least two inwardly disposed domes (8), which have a cavity extending along the centre line thereof and which face perpendicularly onto the casing plate (2) of the laundry drum and serve for fastening of the entrainer (3), **characterised in that**
- a hole pattern corresponding with the arrangement of the domes (8) of an entrainer (3) is punched into the casing plate (2) of the laundry drum for each entrainer,
- the entrainer (3) is so placed on the casing plate (2) by its dome end (13) projecting beyond the contact surface of the entrainer (3) towards the casing plate (2) that the dome ends (13) penetrate the holes (7) of the hole pattern,
- counter-holders (11) are introduced from the opposite side into the cavities (10) of the domes (8),
- holding-down devices (12) are moved against the casing plate (2) from the fastening side,
- dies (14) are moved from the fastening side against the dome ends (13) and cause heating of the dome ends (13) until the dome ends (13) have mushroom hoods which are produced in the hot-moulding method and which rest by their brims (16) from outside on the regions of the casing plate (2) surrounding the holes (7) and
- finally in this sequence all dies (14), holding-down devices (12) and counter-holders (11) are moved back.

2. Method according to claim 1, **characterised in that** the die (14) is heated.

3. Method according to claim 1, **characterised in that** the die (14) after movement down onto the dome ends (13) is brought into ultrasonic vibrations and transmits the vibrations to the plastics material or the dome ends (13), whereby the plastics material heats up.

4. Fastening tool for carrying out the method according to one of claims 1 to 3, in which slightly conically shaped counter-holders (11) are so fastened in the arrangement of the hole pattern that their ends come into pressurable contact with the bases of the cavities (10) in the domes (8) when the contact surface of the entrainer (3) rests on the inner side of the casing plate (2).

5. Fastening tool according to claim 4, **characterised in that** holding-down devices (12) disposed in operative connection with the counter-holders (11) in terms of process are so arranged that they are disposed opposite interior-space fittings, which reach from the vicinity of the domes (8) to the inner surface of the casing plate (2), of the entrainer (3) and which for bringing them into operation can be moved up to the casing plate (2) firmly pressed against the fittings, and that dies (14) with mushroom-head-shaped ends imaged in negative shape are arranged in registration with the hole pattern and are heatable, which after the counter-holding and the holding down can be moved to such an extent towards the dome ends (13) until a brim (16), which is of sufficient width for fastening, has formed at each dome end (13), and transmit heat energy to the dome ends (13).

6. Fastening tool according to claim 5, **characterised in that** the domes (8) have surrounding support walls which reach up to the inner surface of the casing plate (2) and that each holding-down device (12) has a hollow cylindrical end surrounding the associated die (14).

7. Fastening tool according to claim 6, **characterised in that** the die (14) is guided almost free of play in the hollow cylinder of the holding-down device (12).

## Revendications

1. Procédé de fixation d'un élément d'entraînement (3) réalisé en une matière synthétique déformable à chaud dans le tambour à linge (1) d'un lave-linge ou d'un sèche-linge, dans lequel le ou les éléments d'entraînement (3) présentent au moins deux dômes (8) situés du côté intérieur, dotés d'un espace creux (10) qui s'étend le long de leur ligne centrale, orientés perpendiculairement à la tôle d'enveloppe (2) du tambour à linge (1) et servant à fixer l'élément d'entraînement (3),
**caractérisé en ce que**
- un motif de trous qui correspond à l'agencement des dômes (8) d'un élément d'entraînement est estampé pour chaque élément d'entraînement (3) dans la tôle d'enveloppe (2) du tambour à linge,
- l'extrémité (13) des dômes de l'élément d'entraînement (3) qui déborde de la surface de contact de l'élément d'entraînement (3) avec la tôle d'enveloppe (2) est placée sur la tôle d'enveloppe (2) de telle sorte que les extrémités (13) des dômes s'enfoncent dans les trous (7) du motif de trous,
- des contre-appuis (11) sont insérés du côté opposé dans l'espace creux (10) des dômes (8),
- des dispositifs de retenue (12) sont amenés contre la tôle d'enveloppe (2) depuis le côté de fixation,
- des poussoirs de façonnage (14) qui provoquent un chauffage de l'extrémité (13) des dômes sont amenés contre l'extrémité (13) des dômes depuis le côté de fixation, jusqu'à ce que l'opération de déformation à chaud ait formé des capots en champignon dans l'extrémité (13) des dômes et des rebords de chapeau (16) qui reposent de l'extérieur sur la partie de la tôle d'enveloppe (2) qui entoure les trous (7) et
- enfin, **en ce que** tous les tampons de façonnage (14), les dispositifs de retenue (12) et les contre-appuis (11) sont rétractés dans cet ordre.

2. Procédé selon la revendication 1, **caractérisé en ce que** le tampon de façonnage (14) est chauffé.

3. Procédé selon la revendication 1, **caractérisé en ce que** le tampon de façonnage (14) est amené en oscillation ultrasonique après avoir été abaissé sur l'extrémité (13) des dômes, les oscillations étant transférées à la matière synthétique de l'extrémité (13) des dômes, ce qui chauffe la matière synthétique.

4. Outil de fixation destiné à mettre en oeuvre le procédé selon l'une des revendications 1 à 3, dans lequel des contre-appuis (11) de forme légèrement conique sont fixés dans l'agencement du motif de trous de telle sorte que leur extrémité vienne se placer sous pression contre le fond des espaces creux (10) ménagés dans les dômes (8) lorsque la surface de contact de l'élément d'entraînement (3) repose contre le côté intérieur de la tôle d'enveloppe (2).

5. Outil de fixation selon la revendication 4, **caractérisé en ce que** des dispositifs de retenue (12) qui coopèrent fonctionnellement avec les contre-appuis (11) sont disposés de manière à déborder à proximité des dômes (8) jusqu'à des garnitures de l'espace intérieur de l'élément d'entraînement (3) qui s'étendent jusqu'à la surface intérieure de la tôle d'enveloppe (2) et peuvent être amenés en position de travail jusqu'à la tôle d'enveloppe (2) repoussée fermement contre les garnitures, et **en ce que** des poussoirs de façonnage (14) dont l'extrémité a une forme de tête de champignon configurée en négatif sont disposés en correspondance au motif de trous et peuvent être chauffés, peuvent être amenés après l'appui et la retenue contre l'extrémité (13) des dômes jusqu'à ce qu'une bordure de chapeau (16) qui est suffisamment large pour la fixation ait été formée sur l'extrémité (13) de chaque dôme et transmette l'énergie de chauffage à l'extrémité (13) des dômes.

6. Outil de fixation selon la revendication 5, **caractérisé en ce que** les dômes (8) sont entourés par des parois de soutien qui s'étendent jusqu'à la surface intérieure de la tôle d'enveloppe (2) et **en ce que** chaque dispositif de retenue (12) présente une extrémité en forme de cylindre creux qui entoure le poussoir de façonnage (14) qui lui est associé.

7. Outil de fixation selon la revendication 6, **caractérisé en ce que** le poussoir de façonnage (14) est inséré presque sans jeu dans le cylindre creux du dispositif de retenue (12).
